(19) Europäisches Patentamt / European Patent Office / Office européen des brevets

(11) **EP 2 464 534 B1**

(12) **FASCICULE DE BREVET EUROPEEN**

(45) Date de publication et mention
de la délivrance du brevet:
**14.05.2014 Bulletin 2014/20**

(21) Numéro de dépôt: **10745290.6**

(22) Date de dépôt: **22.06.2010**

(51) Int Cl.:
***B60K 31/04*** *(2006.01)*

(86) Numéro de dépôt international:
**PCT/FR2010/051264**

(87) Numéro de publication internationale:
**WO 2011/018565 (17.02.2011 Gazette 2011/07)**

(54) **PROCÉDÉ DE FONCTIONNEMENT D'UN DISPOSITIF DE LIMITATION DE LA VITESSE D'UN VÉHICULE AUTOMOBILE.**

BETRIEBSVERFAHREN EINER VORRICHTUNG ZUR BEGRENZUNG DER GESCHWINDIGKEIT EINES KRAFTFAHRZEUGES

OPERATION METHOD OF A DEVICE FOR LIMITING THE SPEED OF A MOTOR VEHICLE

(84) Etats contractants désignés:
**AL AT BE BG CH CY CZ DE DK EE ES FI FR GB GR HR HU IE IS IT LI LT LU LV MC MK MT NL NO PL PT RO SE SI SK SM TR**

(30) Priorité: **12.08.2009 FR 0955630**

(43) Date de publication de la demande:
**20.06.2012 Bulletin 2012/25**

(73) Titulaire: **Renault s.a.s.**
**92100 Boulogne-Billancourt (FR)**

(72) Inventeur: **GARCIA, Pablo**
**F-75015 Paris (FR)**

(56) Documents cités:
**GB-A- 2 298 937      US-A1- 2003 023 364**

**Description**

La présente invention se rapporte à un procédé de fonctionnement d'un dispositif de limitation de la vitesse d'un véhicule automobile.

Sur les véhicules actuels, il est connu de prévoir un dispositif de limitation de vitesse longitudinale. Ce dispositif de limitation empêche le conducteur, sauf à passer délibérément outre l'empêchement, de commander un dépassement d'une certaine vitesse de consigne. Cette vitesse de consigne est par exemple réglée grâce à une interface homme-machine. Alternativement, elle peut être imposée par la réglementation pour certaines catégories de véhicules.

Le dispositif de limitation comprend par exemple au moins trois fonctions lorsqu'il est activé. Une première fonction permet de générer, à partir de la vitesse de consigne, une vitesse de référence utilisée par une boucle de commande. Une deuxième fonction permet de calculer, par exemple grâce à une loi de commande en boucle fermée, une valeur de couple ou d'effort demandée au moteur. Une troisième fonction permet de superviser l'activation du dispositif de limitation et d'arbitrer entre la valeur de couple d'effort demandé par le conducteur via la pédale d'accélérateur et la valeur de couple d'effort qui doit être demandée pour respecter la consigne de limitation de vitesse.

Selon l'état du véhicule automobile, le dispositif de limitation de vitesse peut être activé ou désactivé. Dans son état désactivé, le dispositif de limitation de vitesse n'agit pas sur la consigne de couple demandé au moteur. Quel que soit l'état du véhicule, le couple demandé au moteur est l'image de l'action qu'exerce le conducteur sur l'interface homme-machine, par exemple l'enfoncement de la pédale d'accélérateur.

Dans son état activé, le dispositif de limitation de vitesse peut agir sur le couple demandé au moteur. Cette action est conditionnée par la vitesse du véhicule et par la position de la pédale d'accélérateur.

Les basculements entre les états activé et désactivé du dispositif de limitation de vitesse peuvent être manuels ou imposés par des dispositifs ou déterminés par des requêtes prioritaires.

Lorsque le dispositif de limitation de vitesse est à l'état activé, on distingue deux modes de fonctionnement. Un premier mode de fonctionnement dit aussi mode de fonctionnement actif permet au dispositif de limitation de vitesse d'agir sur la consigne de couple demandé au moteur en fonction de l'enfoncement de la pédale d'accélération. Ce mode de fonctionnement actif est mis en oeuvre lorsque la différence entre la vitesse de consigne de limitation de vitesse et la vitesse du véhicule automobile est inférieure à un seuil d'activation $h_{ON}$.

Un deuxième mode de fonctionnement dit aussi mode de fonctionnement inhibé permet au dispositif de ne plus agir sur le couple moteur demandé. C'est le conducteur qui garde la main sur le couple demandé au moteur. Ce mode de fonctionnement inhibé est mis en oeuvre lorsque la différence entre la vitesse de consigne de limitation de vitesse et la vitesse du véhicule automobile est supérieure à un seuil d'activation $h_{OFF}$.

Lorsque le dispositif de limitation de vitesse est activé et dans le mode de fonctionnement actif, on distingue deux phases de fonctionnement. Une première phase est caractérisée par le fait que le dispositif de limitation de vitesse est maître et contrôle donc la consigne de couple demandé au moteur afin d'éviter que la vitesse du véhicule dépasse la consigne de limitation de vitesse.

Une deuxième phase est caractérisée par le fait que le conducteur est maître et contrôle donc la consigne de couple demandé au moteur. Cette phase se produit lorsque l'appui sur la pédale d'accélérateur est faible et insuffisant pour que la vitesse du véhicule dépasse la vitesse de consigne de limitation de vitesse.

Dans certaines conditions, on constate que le passage du mode de fonctionnement actif au mode de fonctionnement inhibé pose des problèmes. Par exemple, imaginons la situation dans laquelle le dispositif de limitation de vitesse se trouvant en mode de fonctionnement actif et dans laquelle le dispositif de limitation de vitesse est en première phase, c'est-à-dire qu'il limite la consigne de couple demandée au moteur. Imaginons maintenant, que dans cette situation, le conducteur maintienne un appui prononcé et constant sur la pédale d'accélérateur tout en modifiant brutalement la valeur de consigne de limitation de vitesse. L'augmentation brutale de la valeur de consigne de limitation de vitesse risque de provoquer un basculement du dispositif de limitation de vitesse dans le mode de fonctionnement inhibé. Dès lors, si cela se produit, la consigne de couple demandé au moteur devient brutalement l'image de l'enfoncement de la pédale d'accélérateur. Ainsi, le passage du mode de fonctionnement actif au mode de fonctionnement inhibé produit une accélération importante du véhicule qui risque d'être mal perçu par le conducteur et qui constitue en soi une prestation médiocre. En effet le conducteur n'est normalement pas capable de comprendre de manière intuitive la relation existant entre cette accélération et son action volontaire de modification de la valeur de consigne de vitesse de limitation entraînant le passage au mode de fonctionnement inhibé du dispositif.

Notons que le passage au mode de fonctionnement inhibé est temporaire. Dès que la vitesse du véhicule est à nouveau proche de la vitesse de consigne de limitation, le dispositif revient dans le mode de fonctionnement actif dans lequel il limite la vitesse du véhicule.

Il est connu de remédier au problème évoqué précédemment soit en réglant un seuil élevé de transition du mode de fonctionnement actif au mode de fonctionnement inhibé, soit en limitant la vitesse de modification de la consigne de limitation de vitesse. Cependant, ces deux solutions dégradent fortement les performances du dispositif de limitation de vitesse.

On connaît de la demande US 2002/143 457 un procédé de commande d'un véhicule automobile pour contrôler sa vitesse et/ou une distance jusqu'à un autre véhicule le précédant. Pour ce faire, deux modes de fonctionnement sont disponibles, un premier mode de contrôle de freinage du véhicule et un deuxième mode de contrôle de l'accélération du véhicule. Il est prévu de basculer de l'un à l'autre de ces modes en fonction de l'accélération longitudinale du véhicule.

On connaît de la demande US 2003/023 364 un procédé de fonctionnement d'un dispositif de limitation de la vitesse d'un véhicule automobile d'après le préambule de la revendication 1. Ce procédé de fonctionnement permet de définir différentes manoeuvres permettant de régler une valeur de consigne de limitation de la vitesse longitudinale du véhicule automobile.

Le but de l'invention est de fournir un procédé de fonctionnement d'un dispositif de limitation de vitesse permettant de remédier au problème évoqué précédemment et améliorant les procédés de fonctionnement connus de l'art antérieur. En particulier, l'invention propose un procédé de fonctionnement d'un dispositif de limitation de vitesse simple, permettant d'éviter des changements de mode de fonctionnement intempestifs lors de modification de la consigne de limitation de vitesse.

Selon l'invention, le procédé régit le fonctionnement d'un dispositif de limitation de la vitesse d'un véhicule automobile comprenant un premier mode de fonctionnement dans lequel le dispositif de limitation limite la vitesse du véhicule automobile à une valeur de consigne de limitation et un deuxième mode de fonctionnement dans lequel le dispositif de limitation ne limite pas la vitesse du véhicule automobile, la transition du premier mode de fonctionnement au deuxième mode de fonctionnement se faisant lorsque la différence entre la valeur de consigne de limitation et la valeur de vitesse du véhicule est supérieure à une première valeur seuil. Le procédé est caractérisé en ce que la première valeur seuil est variable au cours du temps.

La première valeur seuil peut évoluer de manière discontinue d'une quantité proportionnelle à la variation de la valeur de consigne de limitation, lors d'une modification de la vitesse de consigne.

La première valeur seuil peut évoluer de manière continue et décroissante (par exemple linéaire) en fonction du temps.

La première valeur seuil peut être minorée par une première valeur.

Dans le premier mode, la première valeur seuil peut être déterminée par la formule suivante :

$$h_{OFF}(t + Te) = \min(h_0, h_{OFF}(t) + \Delta V_{cons}(t) - grad_h \times Te)$$

avec :

Te : un pas d'échantillonnage temporel,

$$\Delta V_{cons}(t) \ = \ V_{cons}(t+Te) - V_{cons}(t),$$

$grad_h$ : un paramètre de réglage positif.

La première valeur seuil peut être remise à une valeur initiale (par la première valeur) lors de tout changement de mode.

L'invention porte encore sur un support d'enregistrement de données lisible par un calculateur sur lequel est enregistré un programme d'ordinateur comprenant des moyens logiciels de mise en oeuvre des étapes du procédé défini précédemment.

Selon l'invention, le dispositif de limitation de la vitesse d'un véhicule automobile comprenant un premier moyen de sélection d'une valeur de consigne régulée et dont la désactivation du premier moyen se fait lorsque la différence entre la valeur de consigne de limitation et la valeur de vitesse du véhicule est supérieure à une première valeur seuil, est caractérisé en ce que la première valeur seuil est variable au cours du temps.

Selon l'invention, le véhicule automobile est caractérisé en ce qu'il comprend un dispositif de limitation de vitesse défini précédemment.

Le dessin annexé représente, à titre d'exemple, un mode de réalisation d'un dispositif de limitation de vitesse selon l'invention.

La figure 1 est un schéma d'un mode de réalisation d'un dispositif de limitation de vitesse selon l'invention.

La figure 2 est un schéma présentant une logique de changement de mode de fonctionnement du dispositif de limitation de vitesse selon l'invention en fonction d'un paramètre de vitesse du véhiculé automobile.

La figure 3 est un schéma présentant une logique d'évolution temporelle d'un paramètre déterminant les transitions entre les modes de fonctionnement d'un dispositif de limitation de vitesse selon l'invention.

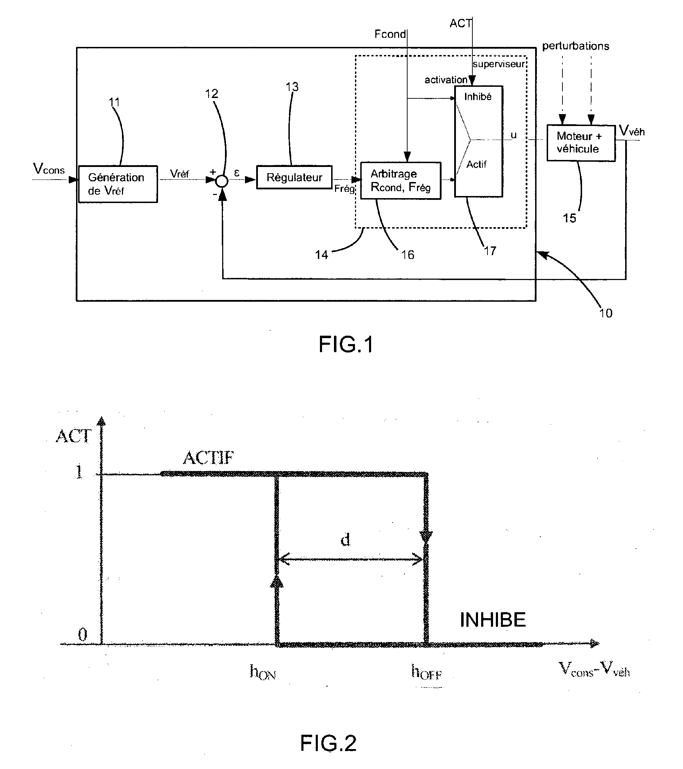

Un dispositif 10 de limitation de la vitesse longitudinale d'un véhicule automobile est représenté schématiquement à la figure 1. En entrée du dispositif, on introduit une consigne de limitation de vitesse $V_{cons}$ et une consigne $F_{cond}$ de couple demandé au moteur par le conducteur par le biais d'une action sur une interface homme-machine et on obtient en sortie une consigne u de couple effectivement demandé au moteur. Le dispositif de limitation comprend un premier module 11 de génération d'une vitesse de référence en fonction de la consigne de limitation de vitesse, un deuxième module 12 de soustraction pour calculer la différence existant entre la vitesse de référence et la vitesse instantanée du véhicule $V_{véh}$, un troisième module 13 de régulation pour calculer une consigne régulée $F_{rég}$ de couple à demander au moteur pour obtenir la vitesse de limitation et un quatrième module 14 de supervision pour fournir la consigne u de couple effectivement demandé au moteur en fonction des valeurs de consigne $F_{cond}$ et $F_{rég}$. Le module de supervision comprend un moyen d'arbitrage 16, 17 ou de sélection pour fournir en sortie, comme consigne u de couple effectivement demandé au moteur, soit la valeur de consigne $F_{cond}$, soit la valeur de consigne $F_{rég}$.

Comme représenté à la figure 2, lorsque le dispositif de limitation de vitesse est à l'état activé, il peut fonctionner selon un premier mode de fonctionnement dit de fonctionnement actif et représenté par un signal logique ACT à l'état haut ou selon un deuxième mode de fonctionnement dit de fonctionnement inhibé et représenté par le signal logique ACT à l'état bas. Comme vu précédemment, le dispositif de limitation de vitesse passe du mode de fonctionnement actif au mode de fonctionnement inhibé lorsque la différence entre la vitesse limite de consigne et la vitesse du véhicule devient supérieure à un premier seuil $h_{ON}$. De même, le dispositif de limitation de vitesse passe du mode de fonctionnement inhibé au mode de fonctionnement actif lorsque la différence entre la vitesse limite de consigne et la vitesse du véhicule devient inférieure à un deuxième seuil $h_{OFF}$, ayant une valeur supérieure au premier seuil $h_{ON}$.

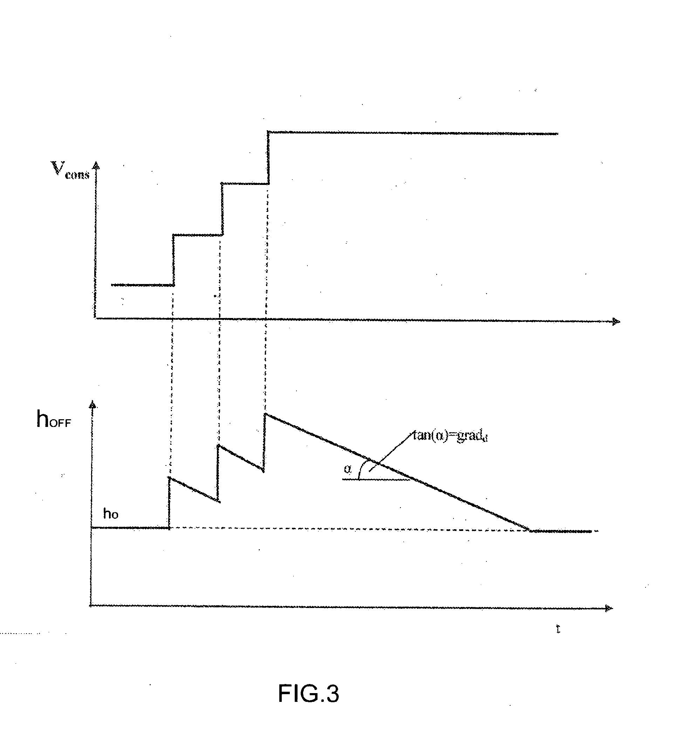

Comme représenté à la figure 3, dans le procédé de fonctionnement du dispositif de limitation de vitesse selon l'invention, lorsque le dispositif de limitation de vitesse est activé et lorsqu'il est en mode de fonctionnement actif et lorsque le dispositif est en phase de contrôle de la consigne de couple demandé au moteur, la valeur du deuxième seuil $h_{OFF}$ évolue dans le temps.

De préférence, la valeur du premier seuil $h_{OFF}$ évolue, lors d'une modification de la vitesse de consigne, de manière discontinue d'une quantité proportionnelle à la variation de la valeur de consigne de limitation $V_{cons}$ ou d'une quantité déterminée par une relation affine la liant à une variation de la valeur de consigne $V_{cons}$ de limitation.

Alternativement, c'est un paramètre d définie par la relation $d=h_{OFF}-h_{ON}$ qui évolue, lors d'une modification de la consigne de limitation, de manière discontinue d'une quantité proportionnelle à la variation de la valeur de consigne $V_{cons}$ de limitation ou d'une quantité déterminée par une relation affine la liant à la variation de la valeur de consigne de limitation $V_{cons}$, la valeur du seuil $h_{ON}$ restant constant.

En dehors des instants de modification de la vitesse de consigne, la valeur du premier seuil $h_{ON}$ peut évoluer de manière continue et décroissante en fonction du temps. Par exemple, l'évolution peut être linéaire.

De préférence, la valeur du premier seuil $h_{OFF}$ est minorée par une première valeur $h_0$ ou la valeur du paramètre d est minorée par une deuxième valeur do.

Ainsi, la valeur du premier seuil $h_{OFF}$ peut valoir :

$$h_{OFF}(t + T_e) = \min(h_0, h_{OFF}(t) + \Delta V_{cons}(t) - grad_h \times T_e)$$

avec :

$T_e$ : un pas d'échantillonnage temporel,

$$\Delta V_{cons}(t) = V_{cons}(t+T_e) - V_{cons}(t),$$

$grad_h$ : un paramètre de réglage positif.

ou la valeur du d peut valoir :

$$d(t + Te) = \min(d_0, d(t) + \Delta V_{cons}(t) - grad_d \times Te)$$

avec :

Te : un pas d'échantillonnage temporel,

$$\Delta V_{cons}(t) \;=\; V_{cons}(t+Te) - V_{cons}(t),$$

$grad_d$ : un paramètre de réglage positif.

De préférence, la première valeur seuil $h_{ON}$ ou le paramètre d est remis à une valeur initiale $h_0$ ou $d_0$ lors de tout changement de mode, d'état ou de phase de fonctionnement du dispositif de limitation.

En outre, lorsque le dispositif de limitation de vitesse est désactivé ou en mode inhibé ou dans une phase dans laquelle le conducteur est maître, alors : $h_{OFF}(t+Te)=h_0$ ou $d(t+Te)=d_0$

Le dispositif de limitation de vitesse selon l'invention et le procédé de fonctionnement du dispositif de limitation de vitesse dans l'invention permettent d'obtenir les avantages suivants :

- ils empêchent le dispositif de limitation de passer dans un mode de fonctionnement inhibé lui faisant perdre le contrôle de la consigne de couple demandé au moteur lors d'une augmentation brutale de la consigne de limitation de vitesse,
- ils empêchent ainsi des variations importantes et inattendues d'accélération du véhicule,
- ils permettent d'éviter de régler des valeurs de seuil $h_{ON}$, $h_{OFF}$ et d a des valeurs pénalisant le fonctionnement du dispositif de limitation de vitesse.

Le dispositif de limitation de vitesse comprend tous les moyens permettant de régir son fonctionnement. A cette fin, le dispositif de limitation de vitesse comprend des moyens matériels et/ou logiciels de mise en oeuvre du procédé de fonctionnement selon l'invention. Les moyens logiciels peuvent notamment comprendre des programmes d'ordinateur.

## Revendications

1. Procédé de fonctionnement d'un dispositif (10) de limitation de la vitesse d'un véhicule automobile comprenant un premier mode de fonctionnement dans lequel le dispositif de limitation limite la vitesse ($V_{véh}$) du véhicule automobile à une valeur ($V_{cons}$) de consigne de limitation et un deuxième mode de fonctionnement dans lequel le dispositif de limitation ne limite pas la vitesse du véhicule automobile, la transition du premier mode de fonctionnement au deuxième mode de fonctionnement se faisant lorsque la différence entre la valeur ($V_{cons}$) de consigne de limitation et la valeur de vitesse du véhicule ($V_{véh}$) est supérieure à une première valeur seuil ($h_{OFF}$), **caractérisé en ce que** la première valeur seuil est variable au cours du temps.

2. Procédé selon la revendication 1, **caractérisé en ce que** la première valeur seuil évolue de manière discontinue d'une quantité proportionnelle à la variation de la valeur de consigne de limitation, lors d'une modification de la vitesse de consigne.

3. Procédé selon la revendication 1 ou 2, **caractérisé en ce que** la première valeur seuil évolue de manière continue et décroissante en fonction du temps.

4. Procédé selon l'une des revendications précédentes, **caractérisé en ce que** la première valeur seuil est minorée par une première valeur ($h_0$).

5. Procédé selon l'une des revendications précédentes, **caractérisé en ce que**, dans le premier mode, la première valeur seuil est déterminée par la formule suivante :

$$h_{OFF}(t + Te) = \min(h_0, h_{OFF}(t) + \Delta V_{cons}(t) - grad_h \times Te)$$

avec :

Te : un pas d'échantillonnage temporel,

$$\Delta V_{cons}(t) = V_{cons}(t+Te) - V_{cons}(t),$$

$grad_h$: un paramètre de réglage positif.

6. Procédé selon l'une des revendications précédentes, **caractérisé en ce que** la première valeur seuil est remise à une valeur initiale lors de tout changement de mode.

7. Support d'enregistrement de données lisible par un calculateur sur lequel est enregistré un programme d'ordinateur comprenant des moyens logiciels de mise en oeuvre des étapes du procédé selon l'une des revendications précédentes.

8. Dispositif (10) de limitation de la vitesse d'après le préambule de revendication 1 d'un véhicule automobile comprenant :

    - une interface homme-machine pour l'introduction d'une consigne de limitation de vitesse $V_{cons}$ et d'une consigne $F_{cond}$ de couple demandé au moteur par le conducteur,
    - un premier module 11 de génération d'une vitesse de référence en fonction de la consigne de limitation de vitesse,
    - un deuxième module 12 de soustraction pour calculer la différence existant entre la vitesse de référence et la vitesse instantanée du véhicule $V_{véh}$,
    - un troisième module 13 de régulation pour calculer une consigne régulée $F_{rég}$ de couple à demander au moteur pour obtenir la vitesse de limitation,
    - un quatrième module 14 de supervision pour fournir la consigne (u) de couple effectivement demandé au moteur en fonction des valeurs de consigne $F_{cond}$ et $F_{rég}$,

le module de supervision comprenant un moyen d'arbitrage 16, 17 pour fournir soit la valeur de consigne $F_{cond}$, soit la valeur de consigne $F_{rég}$ comme consigne (u) de couple effectivement demandé au moteur.

9. Véhicule automobile, **caractérisé en ce qu'**il comprend un dispositif (10) de limitation de vitesse selon la revendication 8.

**Patentansprüche**

1. Betriebsverfahren einer Vorrichtung (10) zur Begrenzung der Geschwindigkeit eines Kraftfahrzeugs, das einen ersten Betriebsmodus aufweist, bei dem die Begrenzungsvorrichtung die Geschwindigkeit ($V_{véh}$) des Kraftfahrzeugs auf einen Begrenzungssollwert ($V_{cons}$) begrenzt, und einen zweiten Betriebsmodus, bei dem die Begrenzungsvorrichtung die Geschwindigkeit des Kraftfahrzeugs nicht begrenzt, wobei der Übergang von dem ersten Betriebsmodus zu dem zweiten Betriebsmodus erfolgt, wenn der Unterschied zwischen dem Begrenzungssollwert ($V_{cons}$) und dem Geschwindigkeitswert ($V_{véh}$) des Fahrzeugs größer ist als ein erster Schwellenwert ($h_{OFF}$), **dadurch gekennzeichnet, dass** der erste Schwellenwert im Laufe der Zeit veränderlich ist.

2. Verfahren nach Anspruch 1, **dadurch gekennzeichnet, dass** sich der erste Schwellenwert bei einer Änderung der Sollgeschwindigkeit diskontinuierlich um eine Menge entwickelt, die zu der Änderung des Begrenzungssollwerts anteilsmäßig ist.

3. Verfahren nach Anspruch 1 oder 2, **dadurch gekennzeichnet, dass** sich der erste Schwellenwert kontinuierlich und abnehmend in Abhängigkeit von der Zeit entwickelt.

4. Verfahren nach einem der vorhergehenden Ansprüche, **dadurch gekennzeichnet, dass** der erste Schwellenwert um einen ersten Wert ($h_0$) verringert wird.

5. Verfahren nach einem der vorhergehenden Ansprüche, **dadurch gekennzeichnet, dass** der erste Schwellenwert in dem ersten Modus durch die folgende Formel bestimmt wird:

$$h_{OFF}(t + Te) = min(h_0, h_{OFF}(t) + \Delta V_{cons}(t) \; grad_h \; x \; Te)$$

wobei:

Te: ein zeitlicher Abtastschritt ist,

$$\Delta V_{cons}(t) = V_{cons}(t + Te) - V_{cons}(t),$$

$grad_h$: ein positiver Einstellparameter ist.

6. Verfahren nach einem der vorhergehenden Ansprüche, **dadurch gekennzeichnet, dass** der erste Schwellenwert bei jedem Moduswechsel auf einen anfänglichen Wert zurückgestellt wird.

7. Datenaufzeichnungsträger, der von einem Rechner gelesen werden kann, auf dem ein Computerprogramm aufgezeichnet ist, das Softwaremittel zum Umsetzen der Schritte des Verfahrens nach einem der vorhergehenden Ansprüche aufweist.

8. Vorrichtung (10) zur Begrenzung der Geschwindigkeit nach dem Verfahren von Anspruch 1 eines Kraftfahrzeugs, die Folgendes aufweist:

- eine Mensch-Maschinen-Schnittstelle zur Eingabe eines Geschwindigkeitsbegrenzungssollwerts $V_{cons}$ und eines von dem Fahrer vom Motor verlangten Drehmomentsollwerts $F_{cond}$,
- ein erstes Modul 11 zum Erzeugen einer Bezugsgeschwindigkeit in Abhängigkeit von dem Geschwindigkeitsbegrenzungssollwert,
- ein zweites Subtraktionsmodul 12 zum Berechnen des Unterschieds, der zwischen der Bezugsgeschwindigkeit und der Momentangeschwindigkeit des Fahrzeugs $V_{véh}$ besteht,
- ein drittes Regelmodul 13 zum Berechnen eines geregelten Drehmomentsollwerts $F_{rég}$, der von dem Motor zu verlangen ist, um die Begrenzungsgeschwindigkeit zu erzielen,
- ein viertes Überwachungsmodul 14 zum Liefern des effektiv in Abhängigkeit von den Sollwerten $F_{cond}$ und $F_{rég}$ vom Motor verlangten Drehmomentsollwerts (u),

wobei das Überwachungsmodul ein Entscheidungsmittel 16, 17 aufweist, um entweder den Sollwert $F_{cond}$ oder den Sollwert $F_{rég}$ als effektiv vom Motor verlangten Drehmomentsollwert (u) zu liefern.

9. Kraftfahrzeug, **dadurch gekennzeichnet, dass** es eine Geschwindigkeitsbegrenzungsvorrichtung (10) nach Anspruch 8 aufweist.

**Claims**

1. Method of operation for a device (10) for limiting the speed of a motor vehicle comprising a first mode of operation in which the limitation device limits the speed ($V_{veh}$) of the motor vehicle to a limitation setpoint value ($V_{cons}$) and a second mode of operation in which the limitation device does not limit the speed of the motor vehicle, the transition from the first mode of operation to the second mode of operation occurring when the difference between the limitation setpoint value ($V_{cons}$) and the speed value of the vehicle ($V_{veh}$) is above a first threshold value ($h_{OFF}$), **characterized in that** the first threshold value is variable over time.

2. Method according to Claim 1, **characterized in that** the first threshold value evolves in a discontinuous manner by a quantity proportional to the variation in the limitation setpoint value, upon modification of the setpoint speed.

3. Method according to Claim 1 or 2, **characterized in that** the first threshold value evolves in a continuous and decreasing manner as a function of time.

4. Method according to one of the preceding claims, **characterized in that** the first threshold value is reduced by a first value ($h_0$).

5. Method according to one of the preceding claims, **characterized in that**, in the first mode, the first threshold value is determined by the following formula:

$$\mathrm{h_{OFF}(t\ +\ Te)\ =\ min\ (h_0,\ h_{OFF}(t)\ +\ \Delta V_{cons}(t)\ -\ grad_h\ \times\ Te)}$$

with:

Te: a temporal sampling step,

$$\Delta V_{cons}(t) = \mathrm{V_{cons}(t+Te) - V_{cons}(t)},$$

$grad_h$: a positive adjustment parameter.

6. Method according to one of the preceding claims, **characterized in that** the first threshold value is reset to an initial value upon any change of mode.

7. Computer-readable data recording medium on which is stored a computer program comprising software means for implementing the steps of the method according to one of the preceding claims.

8. Device (10) for limiting the speed, according to the method of Claim 1, of a motor vehicle comprising:

- a human-machine interface for the introduction of a speed limitation setpoint $V_{cons}$ and a setpoint $F_{cond}$ for torque demanded of the engine by the driver,
- a first module 11 for generating a reference speed as a function of the speed limitation setpoint,
- a second subtraction module 12 for computing the difference existing between the reference speed and the instantaneous speed of the vehicle $V_{veh}$,
- a third adjustment module 13 for computing an adjusted setpoint $F_{reg}$ for torque to be demanded of the engine to obtain the limitation speed,
- a fourth supervision module 14 for providing the setpoint (u) for torque effectively demanded of the engine as a function of the setpoint values $F_{cond}$ and $F_{reg}$,

the supervision module comprising an arbitration means 16, 17 for providing either the setpoint value $F_{cond}$ or the setpoint value $F_{reg}$ as setpoint (u) for torque effectively demanded of the engine.

9. Motor vehicle, **characterized in that** it comprises a device (10) for limiting speed according to Claim 8.

FIG.1

FIG.2

FIG.3

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2002143457 A
- US 2003023364 A